# EUROPEAN PATENT APPLICATION

(11) **EP 3 139 040 A1**
(43) Date of publication of application: **08.03.2017**
(21) Application number: 15786298.8
(22) Date of filing: 22.04.2015
(51) Int. Cl.: F03G 3/00

(54) **ROTATION DRIVE DEVICE**

(30) Priority: 27.04.2014 JP 2014092166; 14.04.2015 JP 2015082295
(71) Applicant: Lead Co., Ltd., Kasugai-city, Aichi 486-0915 (JP)
(72) Inventor: ISHIDA, Shoji, Kasugai-city Aichi 486-0915 (JP)
(74) Representative: Horn Kleimann Waitzhofer Patentanwälte PartG mbB
(86) International application number: PCT/JP2015/062229
(87) International publication number: WO 2015/166856

(57) **Abstract**

A rotary driving apparatus is provided that is capable of rotating a rotary body by varying a weight balance, and to efficiently achieve the rotation of the rotary body while generating little noise such as collision noise. A rotary driving apparatus 1 includes a rotary body 5 having a point O as its center and rotatable around the point O, rotation detecting means 6 for detecting its rotational state, six rotary weight devices 7a to 7f on the body 5, and a power generation device 8 generating electric power by the rotation of the body 5, wherein each of the devices 7a to 7f includes a rotary arm 10 rotatably mounted to the body 5, the arms 10 at approximately six-fold symmetrical positions about the point O, a motor 11 to rotate the arm 10 at a rotational speed same as the body 5 in a rotation direction opposite to a rotation direction of the body 5, and a weight 12 on the arm 10 on its free end side, and wherein all the devices 7a to 7f are controlled by the motors 11 such that all the arms 10 are oriented laterally on a same side, and the body 5 is rotated by a weight balance about the point O among all the weights 12 on all the arms 10.

## Description

### Technical Field

The present invention relates to a rotary driving apparatus capable of continuously rotating a rotary body that has a point O as its center and rotatable around the point O by a weight balance of the rotary body about the point O.

### Background Art

For example, a rotary driving apparatus is disclosed in Patent Document 1, which includes a circular rotary plate rotatable around the central axis in a vertical plane, thirty-two weight-hanging rods rotatably mounted on the circumference of the rotary plate at 32-fold symmetrical positions about the central axis, and weights attached to the weight-hanging rods on their free end sides, the rotary driving apparatus being arranged to further rotate the rotary plate by the weight balance among the weights the positions of which vary with the rotation of the rotary plate.

### Citation List

### Patent Literature

Patent Document 1: Patent JP Hei4-342878

### Summary of Invention

### Problems to be solved by the Invention

The rotary driving apparatus of Patent Document 1 has a configuration that the weight-hanging rods are tipped by their own weights to vary the weight balance. Thus, the recoil of the weights that is produced when the weight-hanging rods are tipped acts on the rotary plate to inhibit smooth rotation of the rotary plate, and such a disturbance in the rotation of the rotary plate could lead to energy loss. In addition, there is another problem of low quietness performance because when the weight-hanging rods are tipped to stop, the members collide with each other to generate collision noise periodically.

The present invention is made in view of the problems described above, and an object of the present invention is to provide a rotary driving apparatus capable of rotating a rotary body by varying a weight balance, and to efficiently achieve the rotation of the rotary body while generating little noise such as collision noise.

### Solution to Problem

To achieve the objects and in accordance with the purpose of the present invention, a rotary driving apparatus according to an embodiment of the present invention includes a rotary body that has a point O as its center and is rotatable around the point O in a vertical plane, rotation detecting means that is capable of detecting a rotational state of the rotary body, rotary weight devices consisting of X pieces (X is an integer of 2 or more) that are mounted on the rotary body, and a power generation device that is arranged to generate electric power by the rotation of the rotary body, wherein each of the rotary weight devices includes a rotary arm that is rotatably mounted to the rotary body, the rotary arms of the rotary weight devices being disposed at approximately X-fold symmetrical positions about the point O on the rotary body, a motor that is arranged to rotate the rotary arm at a rotational speed same as the rotary body in a rotation direction opposite to a rotation direction of the rotary body, and a weight that is mounted on the rotary arm on its free end side, and wherein all of the rotary weight devices are arranged to be controlled by the motors in a manner that all of the rotary arms are oriented laterally on a same side, and the rotary body is arranged to be rotated by keeping a weight balance about the point O among all the weights mounted on all the rotary arms on their free end sides.

It is to be noted that the rotary arms rotatably mounted at the X-fold symmetrical positions about the point O define the rotary arms rotatably supported by shafts that are provided at the intervals of approximately (360°/X)° around the point O.

According to another embodiment of the present invention, in the rotary driving apparatus according to claim 1, the motors are arranged to control the rotary arms in a manner such that the weights are constantly oriented in a direction of approximately three o'clock when the rotary body is seen from a direction in which the rotary body rotates in a clockwise direction, as described in claim 2.

According to another embodiment of the present invention, in the rotary driving apparatus according to claim 1 or 2, driving shafts of the motors and the rotary arms are coupled to each other via gear transmission mechanisms, and the gear transmission mechanisms have such a reduction gear ratio as to prevent rotating forces from being reversely transmitted from the rotary arms to the driving shafts of the motors, as described in claim 3.

According to another embodiment of the present invention, in the rotary driving apparatus according to any one of claims 1 to 3, the electric power generated by the power generation device is accumulated in a battery, and the electric power in the battery is supplied to the motors, as described in claim 4.

### Effects of the Invention

In the rotary driving apparatus according to the present invention, because the rotary arms disposed at approximately X-fold symmetrical positions about the point O are arranged to rotate in synchronization with the rotary body in the rotation direction opposite to the rotation direction of the rotary body, all of the rotary arms are constantly oriented laterally on a same side. Thus, the weights mounted on the rotary arms on the free end sides are constantly at lateral positions on a same side with respect to the rotational center of the rotary arms, so that the entire weight balance about the point O of the rotary body is brought into a state of being constantly biased to one side. The weight balance biased to one side allows the rotary body to rotate around the point O. In addition, the shift of the weights is in synchronization with the rotation of the rotary body, so that there is no undulation in weight balance and the weight balance is smooth, achieving effective rotation of the rotary body while generating little noise such as collision noise.

In addition, when the rotary driving apparatus has the configuration that the rotary arms are controlled in a manner such that the weights are constantly oriented in a direction of approximately three o'clock when the rotary body is seen from a direction in which the rotary body rotates in a clockwise direction as described in claim 2, the difference of the weight balance between the right and left can be set to be large, achieving effective rotation of the rotary body.

In addition, when the rotary driving apparatus has the configuration that the driving shafts of the motors and the rotary arms are coupled to each other via gear transmission mechanisms having such a reduction gear ratio to prevent rotating forces from being reversely transmitted from the rotary arms to the driving shafts of the motors as described in claim 3, the rotary arms maintain their lateral orientation even if the rotary body is stopped by putting a brake on it for a periodic inspection, for example, to stop the energization to the motors, which allows easy resumption of the operation.

In addition, when the rotary driving apparatus has the configuration that the electric power generated by the power generation device is accumulated in a battery, and the electric power in the battery is supplied to the motors as described in claim 4, the rotary body can be made to keep rotating under specific conditions.

### Brief Description of Drawings

FIG. 1 is a cross-sectional view of a rotary driving apparatus when a rotary body is seen from a direction in which the rotary body rotates in a clockwise direction.
FIG. 2 is a longitudinal cross-sectional view of the rotary driving apparatus when seen from the center.
FIG. 3 is an enlarged view of relevant components in FIG. 1.
FIG. 4 is an enlarged view of relevant components in FIG. 2.
FIG. 5 is a perspective view of a rotary weight device.
FIG. 6 is an enlarged view of the V portion in FIG. 2.

### Description of Embodiments

Hereinafter, descriptions of embodiments of the present invention will be provided with reference to the drawings.

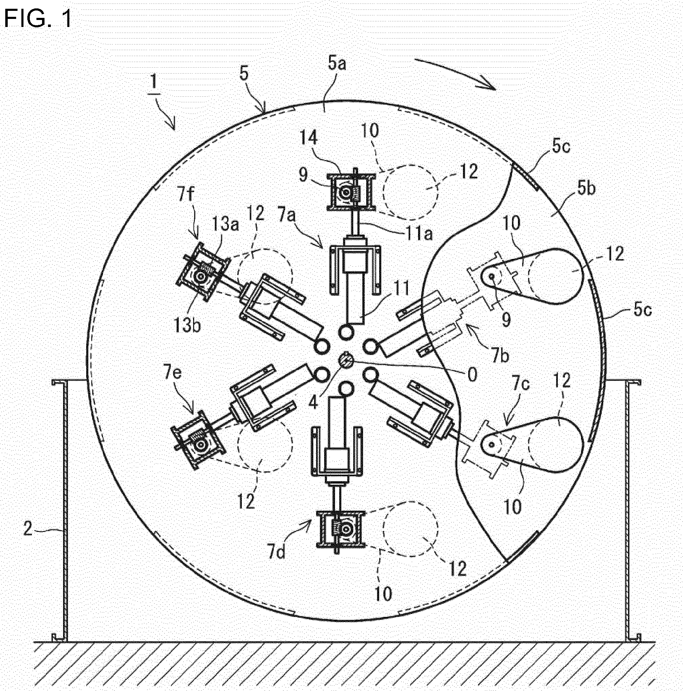

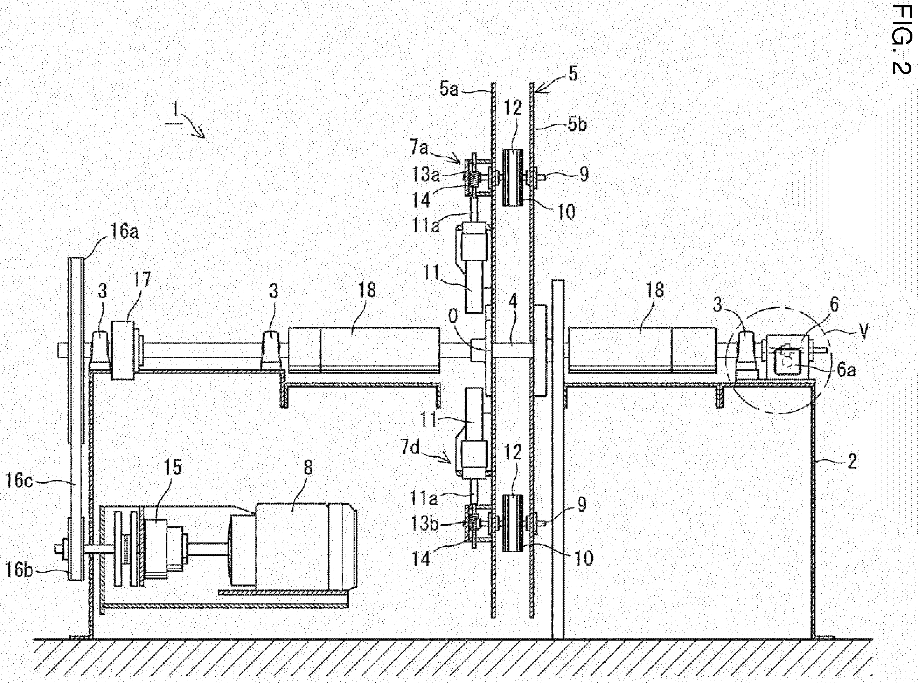

As shown in FIG. 1 and FIG. 2, a rotary driving apparatus 1 roughly includes a rotary shaft 4 that is mounted horizontally and rotatably on the upper surface of a fixed base 2 for the apparatus by a plurality of bearings 3, 3, and 3, a rotary body 5 with a center point O that is capable of rotating in a vertical plane by inserting the rotary shaft 4 into the center point O to fix the rotary body 5 to the rotary shaft 4, rotation detecting means 6 that is capable of detecting the rotational state of the rotary body 5, rotary weight devices 7a to 7f consisting of six pieces that are mounted on the rotary body 5 at six-fold symmetrical positions about the point O, and a power generation device 8 that is arranged to generate electric power by rotating force of the rotary body 5.

### [Rotary body]

The rotary body 5 includes two circular plates 5a and 5b that are fixed apart from each other by a predetermined distance in the axial direction of the rotary shaft 4, and six circumferential side plates 5c, 5c ... that are mounted at regular intervals on the rotary body 5 at circumferential positions so as to keep the distance between the circular plates 5a and 5b.

### [Rotation detecting means]

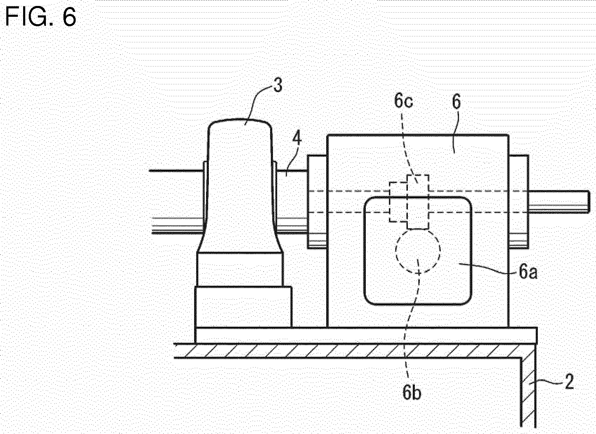

The rotation detecting means 6 is mounted on the top rear side (at the right end in FIG. 2) of the base 2 for the apparatus as shown in FIG. 2 and FIG. 6, and the rear end portion of the rotary shaft 4 is inserted into the rotation detecting means 6. By detecting the rotational state (mainly, the rotational speed) of the rotary shaft 4, the rotational state of the rotary body 5 that is integral with the rotary shaft 4 can be detected.

The rotation detecting means 6 according to the present embodiment roughly includes a control motor 6a, and a gear transmission mechanism for coupling an output shaft of the control motor 6a to the rotary shaft 4. The gear transmission mechanism defines a combination of a worm 6b mounted on the output shaft of the control motor 6a, and a worm wheel 6c mounted on the rotary shaft 4, or a combination of spur gears (not illustrated). The gear transmission mechanism has an increased reduction gear ratio of about 20: 1 to 10:1, whereby a rotating force is prevented from easily being reversely transmitted from the rotary shaft 4 to the output shaft of the control motor 6a. A method for detecting the rotational state of the rotary body 5 with the use of the rotation detecting means 6 is described later.

### [Rotary weight device]

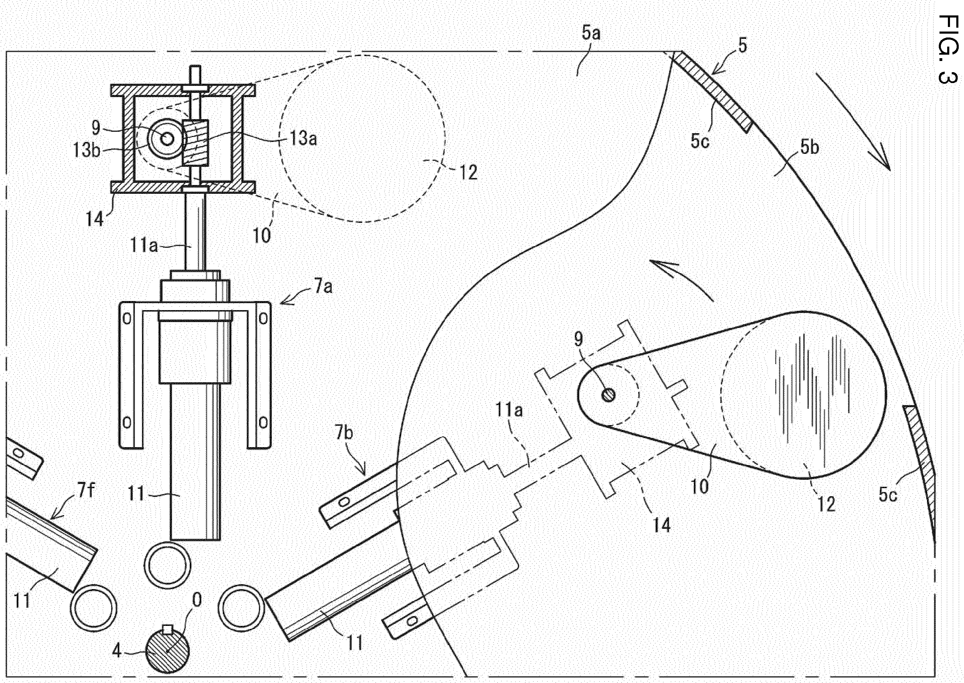

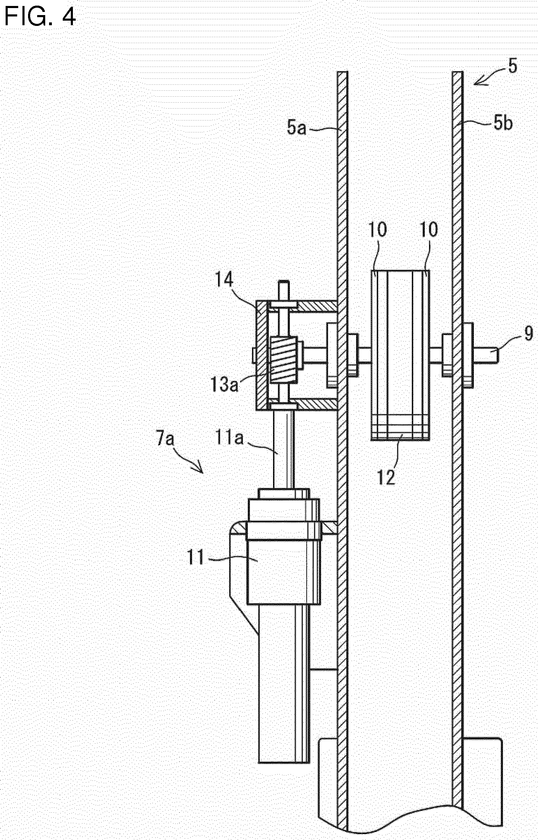

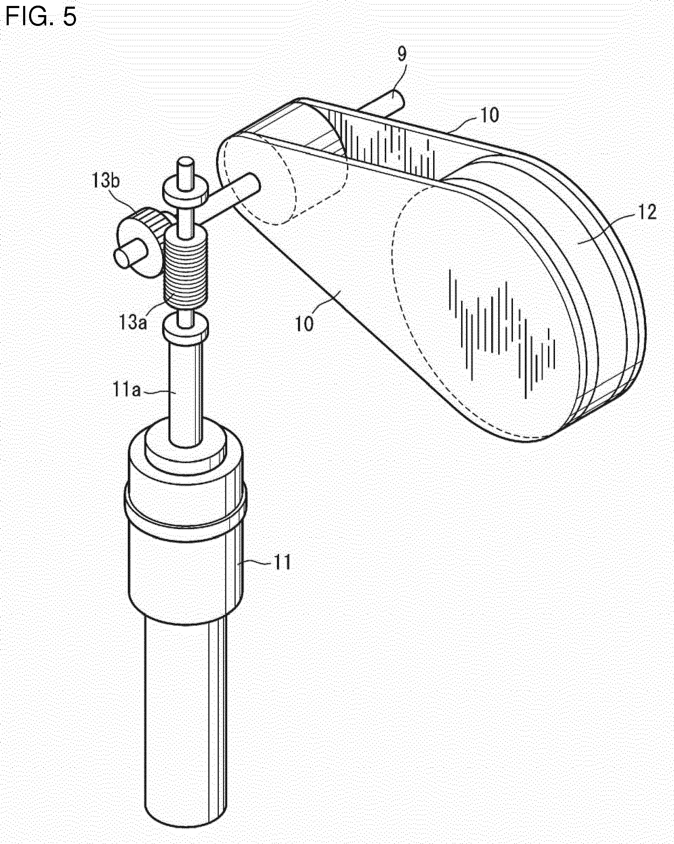

The rotary weight devices 7a to 7f, consisting of six pieces, are mounted on the rotary body 5 at the six-fold symmetrical positions about the point O as described above. All of the rotary weight devices 7a to 7f have the same configuration, so that the detailed description of the configuration of the one rotary weight device 7a will be provided referring to FIG. 3 to FIG. 5.

As shown in FIG. 3 to FIG. 5, the rotary weight device 7a includes a driven shaft 9 that is rotatably supported between the circular plates 5a and 5b of the rotary body 5, a pair of two rotary arms 10 that are integrally mounted on the driven shaft 9 and rotatably mounted between the circular plates 5a and 5b, a motor 11 that is mounted on the front surface of the circular plate 5a and arranged to rotate the rotary arms 10, and a weight 12 that is mounted on the rotary arms 10 on their free end sides.

A driving shaft 11a of the motor 11 and the rotary arms 10 are coupled to each other via a gear transmission mechanism. The gear transmission mechanism defines a combination of a worm 13a mounted on the driving shaft 11a of the motor 11 and a worm wheel 13b mounted on the driven shaft 9 that is integral with the rotary arms 10. The gear transmission mechanism has an increased reduction gear ratio of about 20: 1, whereby a rotating force is transmitted to the rotary arms 10 while the rotating force is prevented from being reversely transmitted from the rotary arms 10 to the driving shaft 11a of the motor 11. It is to be noted that the reference numeral 14 in the drawings defines a gear box for covering the gear transmission mechanism.

The motor 11 is arranged to rotate the rotary arms 10 in synchronization with the rotation of the rotary body 5, which is detected by the rotation detecting means 6, in a rotation direction opposite to the rotation direction of the rotary body 5, and arranged to control the rotary arms 10 in a manner such that the weight 12 is constantly oriented in a direction of three o'clock in the state of FIG. 1 where the rotary body 5 is seen from a direction in which the rotary body 5 rotates in the clockwise direction.

### [Power generation device]

The power generation device 8 is disposed inside of the base 2 for the apparatus on the front side (on the left side in FIG. 2), and is coupled to the rotary shaft 4 of the rotary body 5 via a transmission mechanism. The transmission mechanism defines a combination of a belt transmission mechanism, a gear transmission mechanism (not illustrated), and a clutch 15. The transmission mechanism is arranged to increase the rotational speed of the rotary shaft 4 with the use of the belt transmission mechanism that has a configuration that an endless belt 16c is hooked on a large diameter driving pulley 16a disposed on the side of the rotary shaft 4 and a small diameter driven pulley 16b disposed on the side of the gear transmission mechanism, to further increase the rotational speed of the rotary shaft 4 with the use of the gear transmission mechanism and transmit the rotation to the power generation device 8, and is also arranged to disengage the rotary shaft 4 from the power generation device 8 with the use of the clutch 15. It is to be noted that the power generation device 8 is connected to a battery (not illustrated), and the generated electric power is once accumulated in the battery, and the electric power can be supplied from the battery to each of the motors 11.

### [The other constituent elements]

The other constituent elements shown in FIG. 2 are a brake 17 disposed on the front side of the rotary shaft 4, and slip rings 18 and 18 disposed at midpoints of the rotary shaft 4. The slip rings 18 and 18 are arranged to supply electric power to the motors 11 that rotate together with the rotary body 5, and transmit rotation control signals and the like to the motors 11.

### [Explanation of operation]

A description of the operation of the rotary driving apparatus 1 having the above-described configuration will be provided.

As the preparation stage, the rotary body 5 is first locked by braking the rotary shaft 4 with the use of the brake 17, the motors 11, 11 ... of the rotary weight devices 7a to 7f are actuated in this state to set the rotary arms 10, 10 ... to be oriented laterally in the direction of three o'clock, and the power generation device 8 is separated from the rotary shaft 4 by disengaging the clutch 15.

The weight balance about the point O of the rotary body 5 in the state where the rotary arms 10, 10 ... are oriented laterally in the direction of three o'clock is brought into the state of being biased to the right as shown in FIG. 1 by the placement of the weights 12 of the rotary weight devices 7a to 7f.

Thus, while a rotating force centered on the point O in a clockwise direction in FIG. 1 is applied on the rotary body 5, the rotary body 5 is kept in a rest state by the braking force of the brake 17, and reverse-transmissibility of the above-described gear transmission mechanism, to be specific, the breaking force produced by stopping the rotating force applied to the rotary shaft 4 with the use of the worm 6b because of the large reduction gear ratio between the worm 6b and the worm wheel 6c or spur gears.

Next, the brake 17 of the rotary driving apparatus 1 is released to rotate the control motor 6a of the rotation detecting means 6 at the same time. Thus, the rotary body 5 starts to rotate in a clockwise direction in FIG. 1 by the weight balance about the point O of the rotary body 5. It is to be noted that the rotation of the rotary body 5 is not free, but the rotary body 5 is rotated only by the amount of the rotation of the worm wheel 6c by the rotation of the control motor 6a that is coupled to the rotary body 5 via the gear transmission mechanism. In other words, the rotation of the rotary body 5 depends on the rotation of the control motor 6a of the rotation detecting means 6, and is proportional to the rotational speed of the control motor 6a. Thus, the rotation of the rotary body 5 can be controlled by controlling the control motor 6a, and the rotational state of the rotary body 5 can be detected based on the rotational speed of the control motor 6a. It is to be noted that the control motor 6a is arranged to only release the rotating force of the rotary body 5 that is braked by the reverse transmissibility of the gear transmission mechanism, and need not rotate the rotary body 5, and thus applies little load on the rotary body 5.

The motors 11 of the rotary weight devices 7a to 7f are actuated by receiving the rotation information of the rotary body 5 from the rotation detecting means 6 to rotate the rotary arms 10 at the rotational speed same as the rotary body 5 in a rotation direction opposite to the rotation direction of the rotary body 5. All the rotary arms 10 constantly orient the weights 12 in a direction of three o'clock in FIG. 1 in this manner. Thus, the weight balance about the point O of the rotary body 5 is constantly biased to the right in FIG. 1, and the rotary body 5 is rotated around the point O by the biased weight balance.

It is to be noted that equating the reduction gear ratio of the gear transmission mechanism of the rotation detecting means 6 and the reduction gear ratio of the gear transmission mechanisms of the rotary weight devices 7a to 7f allows the rotation of the rotary body 5 to be easily synchronized with the rotation of the rotary arms 10 only by equating the rotational speed of the control motor 6a and the rotational speed of the motors 11 of the rotary weight devices 7a to 7f.

Engaging the clutch 15 when the rotation of the rotary body 5 reaches a certain level of speed allows the rotary shaft 4 to be coupled to the power generation device 8 via the transmission mechanism to start power generation, and the generated electric power is accumulated in the battery to be supplied to the motors 11 of the rotary weight devices 7a to 7f from the battery.

### [Example 1]

The rotary driving apparatus 1 to the above-described specifications can be produced in the following manner.

The above-described rotary body 5 is produced by jointing iron circular plates 5a and 5b each having a diameter of 1292 mm and a thickness of 4.5 mm and spaced apart from each other by a distance of 91 mm.

The rotary weight devices 7a to 7f consisting of six pieces are disposed at six-fold symmetrical positions at the intervals of about 60 degrees such that the centers of the driven shafts 9 of the rotary arms 10 are positioned within a 418-mm radius of the point O that defines the center of the circular plate 5a.

Each weight 12 for the rotary weight devices 7a to 7f is made of a metallic circular plate having a diameter of 136 mm and a weight of about 4.3 kg.

Each of the rotary arms 10 is set to have an about 160-mm effective length from the center of the driven shaft 9 to the center of the weight 12.

AC servo motors (SGMJV-01A 3AHB2C 100W) manufactured by YASKAWA ELECTRIC CORPORATION are used for the motors 11 of the rotary weight devices 7a to 7f. The reduction gear ratio between the warms 13a and the worm wheels 13b that couple the driving shafts 11a of the motors 11 to the rotary arms 10 is set to be 20:1.

An AC servo motor (SGMJV-02A 3AHB2C 200W) manufactured by YASKAWA ELECTRIC CORPORATION is used for the control motor 6a of the rotation detecting means 6. A combination of spur gears having a reduction gear ratio of 10:1 is used for the gear transmission mechanism that couples the output shaft of the control motor 6a to the rotary shaft 4.

A generator (SKY-HG350W) manufactured by SKY-DENSHI CORPORATION is used for the power generation device 8.

The gear ratio and the like of the transmission mechanism is set such that the rotation of the rotary shaft 4 is accelerated by a factor of sixty-three to be transmitted to the power generation device 8.

A prototype of the rotary driving apparatus 1 to these specifications was built. The rotary body 5 was rotated at about 5.6 rpm for two hours, and it was confirmed that the power generation device 8 could be rotated smoothly and stably at about 350 rpm. It is to be noted that total power consumption of the rotary driving apparatus 1 at this time was 976 Wh. This prototype was built without a battery, so that electric power was supplied from an external power source. In addition, according to the basic specifications for the above-described generator of the power generation device 8, electric power of 2,192 Wh (a DC value after rectification by a bridge) was generated at the rotational speed of about 350 rpm, and an electric heater that was connected as a load normally generated heat.

While the embodiment of the present invention has been described in detail, the present invention is not limited to the above-described embodiment. For example, while the rotary weight devices 7a to 7f consisting of six pieces are used in the above-described embodiment, rotary weight devices consisting of less than six pieces or more than six pieces may be used. It is preferable to use rotary weight devices consisting of six pieces.

In addition, while one rotary body 5 is used in the above-described embodiment, a plurality of rotary bodies 5 may be used disposed on the same axis, and the rotary weight devices 7a to 7f may be oriented such that the adjacent rotary bodies 5 and 5 rotate in directions opposite to each other. In that case, a rotation-direction converting device (e.g., a combination of a pair of opposed bevel gears, and an middle bevel gear that is between the bevel gears to mesh with them) may be interposed at the border of the adjacent rotary shafts 4 and 4, and the rotation direction of one rotary shaft 4 may be reversely converted to be transmitted to the other rotary shaft 4. In the above-described case where the plurality of rotary bodies 5 are disposed on the same axis and the rotary shafts 4 and 4 are coupled to each other such that the adjacent rotary bodies 5 and 5 rotate in directions opposite to each other, the biased weight balance of one rotary body 5 can be cancelled out by the biased weight balance of the other rotary body 5. Thus, the entire weight balance of the rotary driving apparatus 1 can be improved.

In addition, while the weights 12 are constantly oriented in a direction of three o'clock when the rotary body 5 is seen from a direction in which the rotary body 5 rotates in a clockwise direction in the above-described embodiment, the weights 12 may be slightly deviated in a direction of two or four o'clock. However, such deviation could reduce rotation efficiency of the rotary body 5, so that it is preferable that the weights 12 should be exactly oriented in a direction of three o'clock.

In addition, while the rotation detecting means 6 defines a combination of the control motor 6a and the gear transmission mechanism in the above-described embodiment, the rotation of the rotary body 5 may be detected directly by an appropriate sensor or the like.

## Claims

1. A rotary driving apparatus comprising:
a rotary body that has a point O as its center and is rotatable around the point O in a vertical plane;
rotation detecting means that is capable of detecting a rotational state of the rotary body;
rotary weight devices comprising X pieces (X is an integer of 2 or more) that are mounted on the rotary body; and
a power generation device that is arranged to generate electric power by the rotation of the rotary body,
wherein each of the rotary weight devices comprises
a rotary arm that is rotatably mounted to the rotary body, the rotary arms of the rotary weight devices being disposed at approximately X-fold symmetrical positions about the point O on the rotary body,
a motor that is arranged to rotate the rotary arm at a rotational speed same as the rotary body in a rotation direction opposite to a rotation direction of the rotary body, and
a weight that is mounted on the rotary arm on its free end side, and wherein all of the rotary weight devices are arranged to be controlled by the motors in a manner that all of the rotary arms are oriented laterally on a same side, and the rotary body is arranged to be rotated by a weight balance about the point O among all the weights mounted on all the rotary arms on their free end sides.

2. The rotary driving apparatus according to claim 1,
wherein the motors are arranged to control the rotary arms in a manner such that the weights are constantly oriented in a direction of approximately three o'clock when the rotary body is seen from a direction in which the rotary body rotates in a clockwise direction.

3. The rotary driving apparatus according to claim 1 or 2,
wherein driving shafts of the motors and the rotary arms are coupled to each other via gear transmission mechanisms, and the gear transmission mechanisms have such a reduction gear ratio as to prevent rotating forces from being reversely transmitted from the rotary arms to the driving shafts of the motors.

4. The rotary driving apparatus according to any one of claims 1 to 3, wherein the electric power generated by the power generation device is accumulated in a battery, and the electric power in the battery is supplied to the motors.
